# EUROPEAN PATENT APPLICATION

(11) **EP 3 509 208 A1**
(43) Date of publication of application: **10.07.2019**
(21) Application number: 18150264.2
(22) Date of filing: 04.01.2018
(51) Int. Cl.: H02P 9/30

(54) **METHOD OF CONTROLLING AN FIELD WOUND SYNCHRONOUS MACHINE**

(71) Applicant: ABB Schweiz AG, 5400 Baden (CH)
(72) Inventor: RODRIGUEZ, Pedro, 722 25 Västerås (SE); PATHMANATHAN, Mehanathan, 722 15 Västerås (SE); LIN, CHENJIE, Fuquay Varina, NC 27526 (US); SHRESTHA, Ghanshyam, Cary, NC 27513 (US)
(74) Representative: Savela, Reino Aleksi

(57) **Abstract**

The present disclosure relates to a method of controlling damping in an exciterless synchronous machine comprising a stator, and a rotor provided with excitation coils, a field winding, a power converter connected between the excitation coils and the field winding via a DC-link, and a braking switch connected across the DC-link, wherein the method comprises closing (Si) the braking switch when a value of an electrical parameter related to the synchronicity of the rotor and a rotating magnetic field is outside a predetermined range to thereby short-circuit the excitation coils.

## Description

### TECHNICAL FIELD

The present disclosure generally relates to synchronous machines and in particular to exciterless synchronous machines.

### BACKGROUND

Synchronous machine excitation systems are designed to supply the required field current to the rotor winding or field winding of a synchronous machine. A difficult part of the excitation process is the mechanical interface which supplies this current to the rotating field winding. This is usually done through carbon brushes (static excitation) or using an exciter machine with a rotating diode or thyristor rectifier (brushless excitation).

The main machine used in static and brushless excitation methods commonly uses damper bars in the surface of the rotor poles. These bars are short-circuited conductors which often have inter-pole connections. Damper bars perform a number of key roles in the main machine, such as allowing direct-on-line starting of synchronous motors, because of torque production due to induced currents in damper bars, and damps the fluctuation in rotational speed due to rotating loads with pulsating torque.

The exciterless concept uses excitation coils in the surface of the rotor poles which are positioned to harvest the magnetic energy of the slotting harmonic. A power electronic converter is used to convert this harvested energy into controllable DC current which is supplied to the field winding.

US8450963B2 discloses an exciterless synchronous machine. This document discloses the use of the excitation coils to allow direct-on-line starting of the machine. The excitation coils are short-circuited either by a network of switches on the AC input of a diode rectifier, or on the DC-side of the diode rectifier. The switches are opened when the rotor approaches synchronous speed.

### SUMMARY

An object of the present disclosure is to provide a method of controlling an exciterless synchronous machine which solves, or at least mitigates, the problems of the prior art.

There is hence according to a first aspect of the present disclosure provided a method of controlling damping in an exciterless synchronous machine comprising a stator, and a rotor provided with excitation coils, a field winding, a power converter connected between the excitation coils and the field winding via a DC-link, and a braking switch connected across the DC-link, wherein the method comprises: closing the braking switch when a value of an electrical parameter related to the synchronicity of the rotor and a rotating magnetic field is outside a predetermined range to thereby short-circuit the excitation coils.

The closing of the braking switch may be obtained for example by monitoring and determining the value, and in the event that the value is outside the predetermined range, the braking switch is closed. This corresponds to active control of the braking switch. Alternatively, the braking switch may be closed without the utilisation of active control, for example by using a voltage divider connected across the DC-link with the midpoint of the voltage divider connected to the gate of the braking switch. The voltage divider may be designed such that when the voltage across the DC-link is above a predetermined value, the braking switch will be triggered to close.

In normal operation, when the electrical parameter is within the predetermined range, the braking switch is open, i.e. in the open state.

In this manner, the excitation coils can be selectively used to provide damper bar functionality. In particular, the excitation coils can be used selectively to damp fluctuations in rotational speed due to rotating loads with pulsating torque. Additionally, by closing the braking switch before start-up, the excitation coils allow direct-on-line starting of synchronous motors because of torque production due to induced currents in the excitation coils acting as damper bars.

According to one embodiment the electrical parameter is a load torque or a voltage across the DC-link. The voltage may in particular be across a DC-link capacitor.

The braking switch may be configured to close when the value is above a predetermined threshold. Thus, for example if the load torque reaches a value above a predetermined threshold or if the voltage across the DC-link reaches a value above a predetermined threshold, the braking switch will close.

One embodiment may comprise, prior to the step of closing, determining the value of the electrical parameter, and in case that the value is outside a predetermined range, carry out the step of closing the braking switch.

One embodiment comprises reopening the braking switch when the value is within the predetermined range. Thus, when the value of the electrical parameter has returned to be within a predetermined acceptable range, the braking switch is reopened.

According to one embodiment the power converter comprises switches for controlling a DC output to the field winding, wherein in the event that the value is outside the predetermined range, the method comprises, simultaneously with the closing of the braking switch, controlling the switches to free-wheel a field winding current. The field winding current may thereby for certain power converter topologies be prevented from entering the braking switch. This may be particularly useful for power converters of a DC-DC converter type, which have an H-bridge topology.

According to one embodiment the power converter comprises an H-bridge comprising a first leg including a first switch and a second switch and a second leg including a third switch and a fourth switch, wherein the field winding is connected between the first leg and the second leg.

The H-bridge comprises the field winding connected to the first switch, the second switch, the third switch and the fourth switch.

According to one embodiment the controlling of the switches involves closing the first switch and the second switch or closing the third switch and the fourth switch.

One embodiment comprises a braking resistor connected in series with the braking switch. The braking resistor limits the current through the braking switch.

There is according to a second aspect of the present disclosure provided a computer program product comprising computer code which when executed by processing circuitry of a control system causes the control system to perform the method according to the first aspect.

There is according to a third aspect of the present disclosure provided an exciterless synchronous machine comprising: a stator, a rotor comprising: excitation coils, a field winding, a power converter connected between the excitation coils and the field winding via a DC-link, and a braking switch connected across the DC-link, wherein the braking switch is configured to close when a value of an electrical parameter related to the synchronicity of the rotor and a rotating magnetic field is outside a predetermined range to thereby short-circuit the excitation coils.

The exciterless synchronous machine may comprise a control system comprising: a storage medium comprising computer code, and processing circuitry, wherein when the computer code is executed by the processing circuitry, the control system is configured to: determine a value of an electrical parameter related to the synchronicity of the rotor and a rotating magnetic field, and in the event that the value is outside a predetermined range, close the braking switch to thereby short-circuit the excitation coils.

The exciterless synchronous machine may be a motor or a generator.

According to one embodiment the electrical parameter is a load torque or a voltage across the DC-link.

According to one embodiment the braking switch is configured to reopen when the value is within the predetermined range.

One embodiment comprises a control system, wherein the power converter comprises switches for controlling a DC output to the field winding, wherein in the event that the value is outside the predetermined range, the control system is configured to, simultaneously with the closing of the braking switch, control the switches to free-wheel a field winding current.

According to one embodiment the power converter comprises an H-bridge comprising a first leg including a first switch and a second switch and a second leg including a third switch and a fourth switch, wherein the field winding is connected between the first leg and the second leg.

According to one embodiment the control system is configured to control the switches by closing the first switch and the second switch or closing the third switch and the fourth switch. If the first switch and the second switch are closed, the third switch and the fourth switch are open. If the third switch and the fourth switch are closed, the first switch and the second switch are open.

One embodiment comprises a braking resistor connected in series with the braking switch.

The braking switch may for example be an insulated gate bipolar transistor (IGBT) or a thyristor crowbar.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically illustrates a block diagram of a control system;
Fig. 2 schematically depicts a block diagram of an example of an exciterless synchronous machine;
Fig. 3 is an example of a circuit used for controlling the damping of an exciterless machine;
Fig. 4 is a flowchart for controlling damping in an exciterless synchronous machine; and
Fig. 5 is another example of a circuit used for controlling the damping of an exciterless machine.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

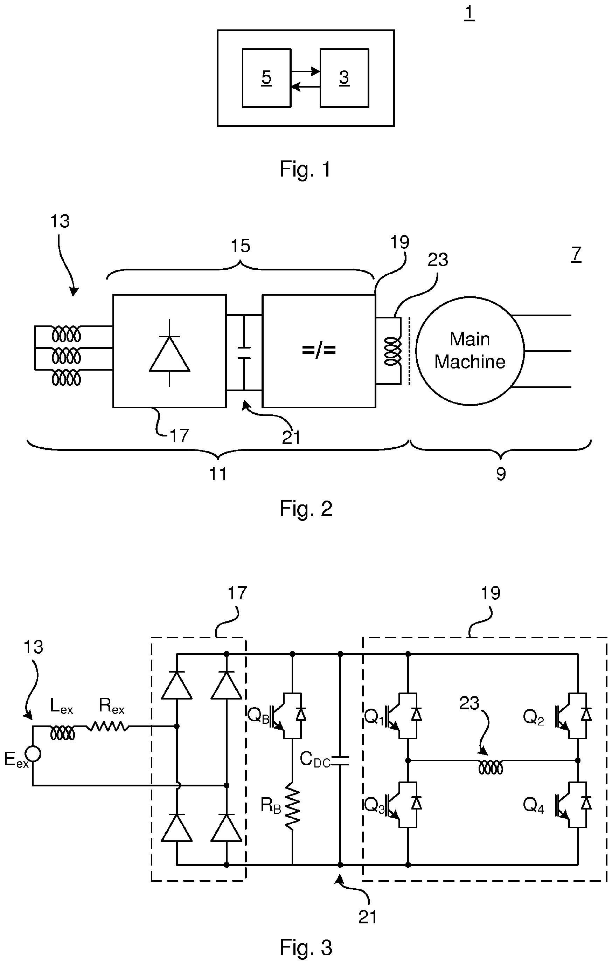

Fig. 1 shows an example of a control system 1 configured to control a damping functionality of an exciterless synchronous machine. The control system 1 comprises processing circuitry 3 and a storage medium 5.

The processing circuitry 3 may use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning exciterless synchronous machine control.

The storage medium 5 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

Fig. 2 schematically shows an example of an exciterless synchronous machine 7. The exciterless synchronous machine 7 comprises a stationary part and a rotating part. In particular, the exciterless synchronous machine 7 comprises a stator 9 and a rotor 11. The rotor 11 forms part of the rotating part. The rotor 11 is configured to rotate relative to the stator 9. The stator 9 forms the stationary part. The rotor 11 is provided with a plurality of poles and a field winding 23. Pairs of poles form pole pairs. The pole pairs and the field winding 23 form electromagnets. The rotor 11 is provided with excitation coils 13 or energy harvesting coils. In particular, each pole of the rotor 11 is provided with excitation coils 13. Energy harvested by the excitation coils 13 are used to feed the field winding 23.

The rotor 11 is furthermore provided with a power converter assembly 15. In the example shown in Fig. 2, the power converter assembly comprises a plurality of rectifiers 17. In Fig. 2, the plurality of rectifiers 17 are illustrated with a single rectifier block. Each rectifier 17 is connected to a respective excitation coil 13. Hence, each pole pair is associated with a respective rectifier 17. Each rectifier 17 may for example be a passive rectifier. The rectifiers may for example comprise diode bridges.

The exemplified power converter assembly 15 furthermore comprises a power converter 19. The power converter 19 is common for all of the excitation coils 13. The power converter 19 is connected to the common output of the rectifiers 17. The exemplified power converter 19 is a DC-DC converter. The power converter assembly 15 furthermore comprises a DC-link 21 which connects the rectifiers 17 with the power converter 19. The power converter 19 is connected to the field winding 23.

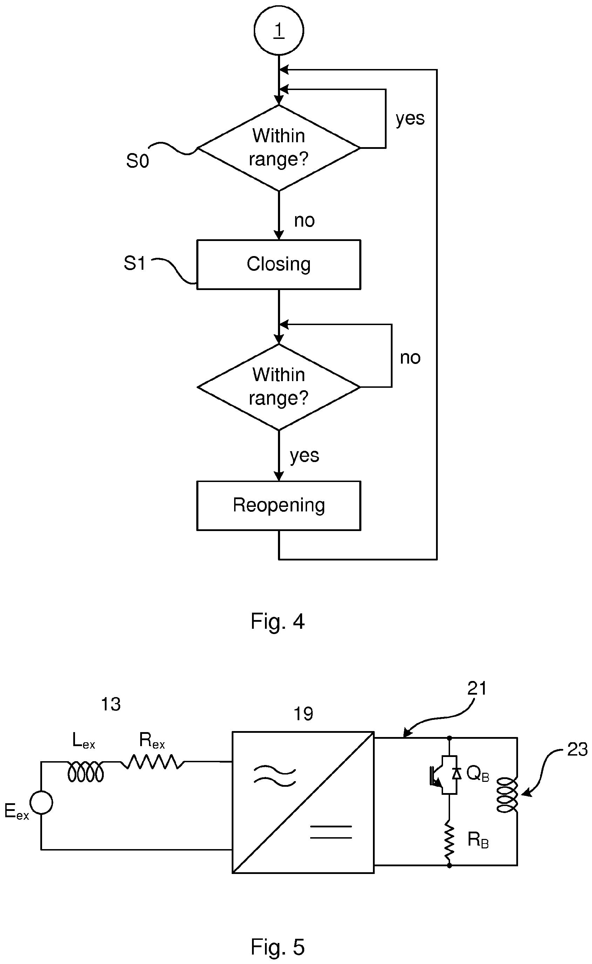

As an alternative to the above exemplified configuration of the power converter assembly, the power converter assembly could be without the rectifier unit 17. The power converter could in this case be an AC-DC converter. An example of this configuration will be described with reference to Fig. 5.

Fig. 3 shows an example of a circuit which includes the power converter assembly 15 described with reference to Fig. 2. The excitation coil 13 illustrated by a model including a voltage source Eₑₓ, an inductance Lₑₓ and an excitation coil resistor Rₑₓ, is connected to the rectifier 17. The rectifier is connected to the power converter 19a, in the present example a DC-DC converter. The rectifier 17 and the power converter 19 are connected via the DC-link 21, which comprises a DC-link capacitor C_{DC}. The power converter assembly 15 furthermore comprises a braking switch Q_{B} connected across the DC-link 21, and a braking resistor R_{B} connected in series with the braking switch Q_{B}. The braking switch Q_{B} is configured to be controlled by the control system 1. The braking switch Q_{B} short-circuits all the excitation coils 13 when the braking switch Q_{B} is closed, i.e. set in its closed state by the control system 1. The excitation coils 13 will thereby act as damper bars.

In some applications where the short-circuit current of the excitation coils 13 is not excessive, the braking resistor R_{B} may be omitted.

In the present example, the power converter 19 has an H-bridge configuration. Hereto, the power converter 19 has a first leg comprising a first switch Q₁ and a second switch Q₂. The power converter 19 has a second leg comprising a third switch Q₃ and a fourth switch Q₄. The field winding 23 is connected between the first leg and the second leg.

The switches Q₁-Q₄ may for example be IGBTs. The braking switch Q_{B} may be an IGBT or a thyristor crowbar circuit.

The control system 1 is configured to control the braking switch Q_{B} based on the value of an electrical parameter that is monitored either by measurements or estimation. The electrical parameter may be the load torque or the voltage across the DC-link 21, i.e. the voltage across the DC-link capacitor C_{DC}. Generally, the load torque provides an early indication of a damping need, while a disturbance or change of the voltage across the DC-link capacitor C_{DC} is mainly a result of a load torque transient, occurring somewhat later than the load torque itself. The present method hence provides an indirect or direct overvoltage protection of the DC-link capacitor C_{DC}.

Fig. 4 shows a method performed by the control system 1, for controlling damping of the exciterless synchronous machine 7 by means of the braking switch Q_{B}. In normal operation, the braking switch Q_{B} is open, i.e. in the open state.

In a step So the value of the electrical parameter is determined. As noted above, the value of the electrical parameter may be determined by means of measurements. The measurements may thus be of the voltage across the DC-link capacitor C_{DC} or of the load torque. Alternatively, or additionally, the voltage across the DC-link capacitor C_{DC} or the load torque may be estimated.

In the event that the value of the electrical parameter is outside a predetermined range, in particular outside an acceptable range, the braking switch Q_{B} is closed in a step Si. The excitation coils 13 are thus short-circuited. The excitation coils 13 will therefore act as damper bars and damp fluctuations in rotational speed of the rotor 11. The braking resistor R_{B} limits the current through the braking switch Q_{B}.

With the DC-DC converter configuration shown in Fig. 3, the first switch Q₁ and the second switch Q₂ may be closed or set in the closed state simultaneously with the closing of the braking switch Q_{B}, while the third switch Q₃ and the fourth switch Q₄ are open, i.e. in the open state. Alternatively, the third switch Q₃ and the fourth switch Q₄ may be set in the closed state simultaneously with the closing of the braking switch Q_{B}, while the first switch Q₁ and the second switch Q₂ are open. The field winding current through the field winding 23 may thereby free-wheel in a loop through the closed switches Q₁ and Q₂ or Q₃ and Q₄ in the power converter 19. This action prevents the field winding current from entering the braking switch Q_{B}, thereby reducing the losses in the braking switch Q_{B}.

When eventually the electrical parameter has obtained a value which is within the predetermined range, the braking switch Q_{B} is reopened by the control system 1 in a step S2. The electrical parameter is hence constantly monitored. The excitation coils 13 will thereby again operate as energy harvesting coils without any significant damping capability and associated losses.

Fig. 5 shows another example of a circuit which includes a different type of power converter assembly. Power converter assembly does not include any passive rectifiers, but includes a power converter 19 in the form of a controllable AC-DC converter, connected to all of the excitation coils 13. The AC-DC converter may be a voltage source rectifier or a current source rectifier, the former already containing a DC link capacitor on the output, and the latter not needing a DC link capacitor. The excitation coil 13 illustrated by a model including a voltage source Eₑₓ, an inductance Lₑₓ and an excitation coil resistor Rₑₓ, is connected directly to the power converter 19. The power converter 19 is connected to the excitation coil 13. The power converter 19 is connected to the field winding 23 via the DC-link 21. The power converter assembly furthermore comprises the braking switch Q_{B} connected across the DC-link 21, and the braking resistor R_{B} connected in series with the braking switch Q_{B}. The braking switch Q_{B} is configured to be controlled by the control system 1, and is operated in the same manner as described above to provide damping.

As an alternative to using the control system 1, the circuits shown in Figs 3 and 5 may be designed such that the braking switch Q_{B} is controlled passively in the event that the closing is based on the voltage across the DC-link capacitor C_{DC}. In this case, for example a voltage divider may be connected across the DC-link, and the midpoint of the voltage divider may be connected to the gate of the braking switch Q_{B}. The voltage divider may be designed such that when the voltage across the DC-link is above a predetermined value, the braking switch Q_{B} will be triggered to close.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of controlling damping in an exciterless synchronous machine (7) comprising a stator (9), and a rotor (11) provided with excitation coils (13), a field winding (23), a power converter (19) connected between the excitation coils (13) and the field winding (23) via a DC-link (21), and a braking switch (Q_{B}) connected across the DC-link (21), wherein the method comprises:
closing (S1) the braking switch (Q_{B}) when a value of an electrical parameter related to the synchronicity of the rotor (11) and a rotating magnetic field is outside a predetermined range to thereby short-circuit the excitation coils (13).

2. The method as claimed in claim 1, wherein the electrical parameter is a load torque or a voltage across the DC-link.

3. The method as claimed in claim 1 or 2, comprising reopening (S2) the braking switch (Q_{B}) when the value is within the predetermined range.

4. The method as claimed in any of the preceding claims, wherein the power converter (19) comprises switches (Q₁, Q₂, Q₃, Q₄) for controlling a DC output to the field winding (23), wherein in the event that the value is outside the predetermined range, the method comprises, simultaneously with the closing of the braking switch (Q_{B}), controlling the switches (Q₁, Q₂, Q₃, Q₄) to free-wheel a field winding current.

5. The method as claimed in claim 4, wherein the power converter (19) comprises an H-bridge comprising a first leg including a first switch (Q₁) and a second switch (Q₂), and a second leg including a third switch (Q₃) and a fourth switch (Q₄), wherein the field winding (23) is connected between the first leg and the second leg.

6. The method as claimed in claim 5, wherein the controlling of the switches (Q₁, Q₂, Q₃, Q₄) involves closing the first switch (Q₁) and the second switch (Q₂), or closing the third switch and the fourth switch.

7. The method as claimed in any of the preceding claims, comprising a braking resistor (R_{B}) connected in series with the braking switch (Q_{B}).

8. A computer program product comprising computer code which when executed by processing circuitry (3) of a control system (1) causes the control system (1) to perform the method as claimed in any of claims 1-7.

9. An exciterless synchronous machine (7) comprising:
a stator (9),
a rotor (11) comprising:
excitation coils (13),
a field winding (23),
a power converter (19) connected between the excitation coils (13) and the field winding (23) via a DC-link (21), and
a braking switch (Q_{B}) connected across the DC-link (21),
wherein the braking switch (QB) is configured to close when a value of an electrical parameter related to the synchronicity of the rotor (11) and a rotating magnetic field is outside a predetermined range to thereby short-circuit the excitation coils (13).

10. The system as claimed in claim 9, wherein the electrical parameter is a load torque or a voltage across the DC-link (21).

11. The system as claimed in claim 9 or 10, wherein the braking switch (Q_{B}) is configured to reopen when the value is within the predetermined range.

12. The system as claimed in any of claims 9-11, comprising a control system (1), wherein the power converter (19) comprises switches (Q₁, Q₂, Q₃, Q₄) for controlling a DC output to the field winding (23), wherein in the event that the value is outside the predetermined range, the control system (1) is configured to, simultaneously with the closing of the braking switch (Q_{B}), control the switches (Q₁, Q₂, Q₃, Q₄) to free-wheel a field winding current.

13. The system as claimed in claim 12, wherein the power converter (19) comprises an H-bridge comprising a first leg including a first switch (Q₁) and a second switch (Q₂), and a second leg including a third switch (Q₃) and a fourth switch (Q₄), wherein the field winding is connected between the first leg and the second leg.

14. The system as claimed in claim 13, wherein the control system (1) is configured to control the switches (Q₁, Q₂, Q₃, Q₄) by closing the first switch (Q₁) and the second switch (Q₂), or closing the third switch (Q₃) and the fourth switch (Q₄).

15. The system as claimed in any of claims 9-14, comprising a braking resistor (R_{B}) connected in series with the braking switch (Q_{B}).
